# EUROPÄISCHE PATENTSCHRIFT

(11) **EP 3 113 715 B1**
(45) Veröffentlichungstag und Bekanntmachung des Hinweises auf die Patenterteilung: **21.08.2019**
(21) Anmeldenummer: 15703911.6
(22) Anmeldetag: 29.01.2015
(51) Int. Cl.: A61C 8/00, A61C 9/00

(54) **EINBRINGPFOSTEN, SYSTEM UND VERFAHREN ZUM ERFASSEN DER LAGE EINES EINGEBRACHTEN IMPLANTATS**
INSERTION POST, SYSTEM AND METHOD FOR DETECTING THE POSITION OF AN INSERTED IMPLANT
TÊTE D'INSERTION, SYSTÈME ET PROCÉDÉ DE DÉTECTION DE LA POSITION D'UN IMPLANT INSÉRÉ

(30) Priorität: 05.03.2014 DE 102014102923
(43) Veröffentlichungstag der Anmeldung: 11.01.2017
(73) Patentinhaber: LOGON OMF Bioactive Systems GmbH, 75179 Pforzheim (DE)
(72) Erfinder: SCHWEIGER, Josef, 83346 Bergen (DE); BEUER, Florian, 85354 Freising (DE)
(74) Vertreter: Nobbe, Matthias
(86) Internationale Anmeldenummer: PCT/EP2015/051820
(87) Internationale Veröffentlichungsnummer: WO 2015/132024

(56) Entgegenhaltungen:
- EP-A1- 1 252 866
- EP-A1- 2 494 938
- EP-A1- 2 700 377
- WO-A1-2014/160909
- DE-A1-102006 045 186
- DE-U1-202013 005 821
- US-A1- 2003 224 327
- US-A1- 2012 141 951

## Beschreibung

### GEBIET DER ERFINDUNG

Die Erfindung betrifft ein System und ein Verfahren zum Erfassen der Lage eines eingebrachten Implantats mit Hilfe eines Intraoralscanners.

### HINTERGRUND DER ERFINDUNG

Aus dem Stand der Technik ist das sogenannte Münchner Implantatkonzept nach Breuer/Schweiger bekannt (Beuer F., Schweiger J., Güth J.-F.: "Synthese von digitalem Workflow und Einzelzahnimplantat - Das Münchner Implantatkonzept MIC", BZB 2013 (Juli, August): 66-71; Beuer F., Schweiger J.: "Einzelzahnkrone gemäß Münchner Implantatkonzept - effiziente Versorgung von Seitenzahnschaltlücken in zwei Sitzungen", Der freie Zahnarzt, DFZ 2012, 56 (4): 78-84). Dieses Konzept kann in analoger, in semianaloger oder in digitaler Technik ausgeführt werden. Das Prinzip besteht darin, dass bereits beim Einbringen des Implantats (sog. Implantatinsertion) die Position des Implantats in Bezug zu Kiefer und Zähnen sowie in Bezug zur Gingiva und zum Gegenkiefer erfasst wird.

Nach der Implantatinsertion ist eine Implantateinheilung von etwa drei bis sechs Monaten vorgesehen. Während dieser Zeit wird vom Zahntechniker der Zahnersatz hergestellt. Der Zahnersatz kann durch Verschraubung oder mit Hilfe einer Zementierung mit dem Implantat verbunden werden.

Nach der Implantateinheilung wird der Zahnersatz in einer Eingliederungssitzung eingebracht und fest mit dem Implantat verbunden. Für die Befestigung durch eine Zementierung werden für den Zahnersatz zwei Teile, nämlich ein Abutment und eine dazugehörige Krone benötigt. Für die Eingliederung kann zunächst das Abutment mit dem Implantat verbunden werden und anschließend die Krone auf das Abutment zementiert werden. Alternativ kann die Krone auch mit dem Implantat verschraubt werden.

Das Münchner Implantatkonzept bietet den Vorteil, dass der Patient in lediglich zwei Behandlungssitzungen, nämlich der Implantatinsertionssitzung und der Eingliederungssitzung, mit einem Zahnersatz versorgt werden kann.

Um den Zahnersatz in passender Form herstellen zu können, sieht das Münchner Implantatkonzept eine analoge, eine semianaloge oder eine digitale Erfassung der Mundraumsituation vor. Für die analoge und semianaloge Erfassung wird ein physisches Modell der Umgebung des eingesetzten Implantats mit Hilfe eines physischen Abdrucks unter Verwendung eines Formmaterials hergestellt. Die Modelle können dabei aus Gips und/oder aushärtbarem Kunststoff gefertigt werden. Bei der semianalogen Erfassung wird zunächst ein "analoger" Abdruck bzw. ein physisches Modell der Implantatumgebung erstellt. Anschließend wird der Abdruck mit Hilfe eines 3D-Erfassungsgerätes, beispielsweise eines optischen Scanners digitalisiert. Anhand der digitalen Daten wird dann der passende Zahnersatz hergestellt.

Bei der rein digitalen Erfassung wird kein physischer Abdruck der Implantatumgebung benötigt. Stattdessen wird nach der Implantatinsertion ein Scankörper auf das eingesetzte Implantat gesetzt bzw. mit diesem verbunden. Die Verbindung wird beispielsweise über eine Verschraubung hergestellt. Alternativ werden zunächst eine Klebebasis oder ein Abutment auf das Implantat aufgeschraubt, auf das anschließend der Scankörper aufgesetzt wird. In einer anderen Ausführung wird der Scankörper durch Reibschluss mit der Klebebasis oder dem Abutment verbunden. Nachdem der Scankörper angebracht wurde, wird dessen Lage in Bezug zu Kiefer und Zähnen sowie in Bezug zur Gingiva und zum Gegenkiefer mit Hilfe eines intraoralen 3D-Erfassungsgerätes und der zugehörigen Software ermittelt. Dadurch kann die Lage des im Patientenkiefer eingesetzten Implantates exakt und eindeutig dreidimensional in seiner Lage im Kiefer bestimmt werden. Nach der Erfassung der genannten Kieferstrukturen bzw. Nachbarzahnstrukturen werden die erfassten Daten in einem Folgeschritt mit den Daten des restlichen Kiefers zusammengefügt, sodass damit die digitale intraorale Situation einschließlich der Implantatposition als dreidimensionaler digitaler Datensatz vorliegt. Auf Basis dieser Daten wird anschließend eine CAD-Konstruktion und die darauf basierende Fertigung des Zahnersatzes vorgenommen.

Nach der Erfassung der Lage des Implantats wird der Scankörper und, sofern verwendet, auch die Klebebasis bzw. das Abutment wieder entfernt und die Operationswunde wird vernäht, sodass das Implantat gedeckt (das heißt unter der vernähten Gingiva) einheilen kann.

Die EP 2 494 938 A1 zeigt eine Installationsvorrichtung mit einem ersten Antriebsabschnitt zur Übertragung eines Drehmoments auf auf die Installationsvorrichtung und einem zweiten Antriebsabschnitt zur Übertragung eines Drehmoments von der Installationsvorrichtung auf ein Implantat. Dabei ist der zweite Antriebsabschnitt durch Vorsprünge gebildet, die in entsprechende Ausnehmungen an einem oberen Abschnitt des Implantats eingreifen können. Die Installationsvorrichtung enthält einen Orientierungsindex zur Bestimmung der Rotationsorientierung des Implantats im Kiefer beim Einschrauben. Ferner offenbart diese Schrift eine Beobachtungskomponente mit einem Beobachtungskomponenten-Index, mit dessen Hilfe die Lage des Implantats im Raum bestimmt werden kann. Dazu kann die Beobachtungskomponente als Scannkörper benützt werden.

Die EP 1 252 866 A1 offenbart eine Anordnung für die Handhabung eines in Knochen einzusetzen Implantats mit einer auf das Implantat lösbar aufsteckbaren Übertragungskappe und einem am Implantat formschlüssig angreifenden Adapter. Am Implantatkopf sind ein interner oder externer Vielkant, eine äußere Implantatschulter und eine unterhalb der Implantatschulter gelegene Schulterkante vorhanden. Die Übertragungskappe hat eine zur Implantatschulter komplementäre Kontaktfläche sowie eine über die Schulterkante rastende elastische Lippe. Der Adapter besitzt einen Vielkant, der zum Eingriff in dem Vielkant am Implantat bestimmt ist. Ein Steckansatz des Adapters dient zum Ansetzen eines Eindrehinstruments. Bei auf das Implantat aufgesteckter Übertragungskappe und eingestecktem Adapter kommt dessen Vielkant mit dem Vielkant am Implantat in Eingriff. Der Steckansatz des durch die Übertragungskappe ragenden Adapters liegt außen. Die Übertragungskappe und der darin steckende Adapter sind lösbar miteinander verbunden. Die Lösekraft für das Trennen der Verbindung zwischen Implantat und Übertragungskappe ist größer bemessen, als die Lösekraft für das Trennen der Verbindung zwischen der Übertragungskappe und dem Adapter.

### ZUSAMMENFASSUNG DER ERFINDUNG

Zwar bietet das eingangs genannte digitale Münchner Implantatkonzept viele Vorteile, aber es erfordert bei seiner Durchführung auch besonderes Können und Vorsicht. Insbesondere im Rahmen der digitalen Erfassung ist große Vorsicht geboten, um zu verhindern, dass der Scankörper und/oder die Klebebasis bzw. das Abutment beim Anbringen und Entfernen nicht in den Rachen des Patienten gelangen und von diesem aspiriert werden. Weiterhin kann ein ungenaues Anbringen des Scankörpers, beispielsweise bei einem reibschlüssigen Aufsetzen, dazu führen, dass die tatsächliche Lage des Implantats geringfügig von der erfassten Lage abweicht.

Der vorliegenden Erfindung liegt die Aufgabe zugrunde, den Ablauf des digitalen Münchner Implantatkonzepts weiter zu verbessern und zu vereinfachen, und insbesondere das Aspirationsrisiko und das Risiko einer Abweichung zwischen der tatsächlichen Lage und der erfassten Lage des Implantats zu verringern.

Diese Aufgabe wird durch die Gegenstände der unabhängigen Ansprüche gelöst. Vorteilhafte Ausführungsformen und Weiterbildungen sind in den abhängigen Ansprüchen angegeben.

Die vorliegende Erfindung schlägt dazu ein System nach Anspruch 1 vor. Das System umfasst einen Einbringpfosten zum Einbringen eines Implantats in einen Kieferknochen vor, wobei der Einbringpfosten einen ersten Antriebsabschnitt zur Übertragung eines Drehmoments auf den Einbringpfosten und einen zweiten Antriebsabschnitt zur Übertragung eines Drehmoments von dem Einbringpfosten auf das Implantat umfasst. Der Einbringpfosten ist lösbar mit dem Implantat derart verbindbar, dass bei der Verbindung ein eindeutiger Zusammenhang zwischen der Lage des Implantats und der Lage des Einbringpfostens besteht. Der Einbringpfosten umfasst ferner einen Scankörperabschnitt, der eine Bestimmung der Lage des Einbringpfostens mittels eines Intraoralscanners gestattet.

Aufgrund des zweiten Antriebsabschnitts und des Scankörperabschnitts kann der erfindungsgemäße Einbringpfosten sowohl zum Einbringen bzw. Einschrauben des Implantats verwendet werden, als auch zum Erfassen der Lage des Implantats direkt nach der Insertion. Demnach ist es für eine digitale Erfassung nicht mehr notwendig, zunächst ein verwendetes Insertionswerkzeug vom inserierten Implantat zu entfernen und anschließend einen Scankörper anzubringen und wieder zu entfernen. Stattdessen können diese drei Schritte in einem einzigen Schritt zusammengefasst werden. Dadurch werden einerseits der Zeitaufwand für eine Behandlung und die Belastung für den Patienten reduziert. Andererseits wird die Behandlung vereinfacht und das Risiko einer Aspiration eines separat anzubringenden und zu entfernenden Scankörpers vermindert.

Aufgrund der lösbaren Verbindbarkeit kann der Einbringpfosten mit Scankörperabschnitt außerhalb des Mundraums des Patienten und bereits vor der Behandlungssitzung mit dem Implantat verbunden werden, sodass eine ungenaue Positionierung des Scankörperabschnitts in Bezug auf das Implantat im Vorfeld ausgeschlossen oder zumindest minimiert werden kann.

Es ist zu beachten, dass in der vorliegenden Beschreibung eine "Lage" die Position und Orientierung in Bezug auf ein vorgegebenes gemeinsames Referenzsystem, das beispielsweise durch einen Intraoralscanner vorgegeben werden kann, bezeichnet. In Anlehnung an den üblichen fachlichen Sprachgebrauch für Einbringelemente wird der erfindungsgemäße Einbringpfosten als Einbring-"Pfosten" bezeichnet. Die Ausgestaltung des erfindungsgemäßen Einbringpfostens ist jedoch nicht auf eine längliche pfostenformähnliche Ausgestaltung beschränkt.

In einer Ausführungsform ist der Scankörperabschnitt nicht rotationssymmetrisch. Dadurch kann mit Hilfe eines Scannens oder Abtastens der nicht rotationssymmetrischen Oberfläche des Scankörperabschnitts eine Erfassung vorgenommen werden, die sich von der Erfassung bei anderen Drehwinkelpositionen unterscheidet und somit von diesen unterschieden werden kann.

Gemäß der vorgenannten oder einer anderen Ausführungsform kann der Scankörperabschnitt auch abschnittsweise kugelförmig sein. Diese Form eignet sich besonders gut für eine intraorale Erfassung und anschließende Weiterverarbeitung der digitalen Daten.

Weiterhin kann der Scankörperabschnitt eine seitliche Abflachung aufweisen. Diese kann beispielsweise bei einer teilweise kugelförmigen Ausgestaltung zu der zuvor beschriebenen nicht-rotationssymmetrischen Form führen.

Zudem kann der Scankörperabschnitt einen oder mehrere geometrische Marker aufweisen. Diese Marker können beispielsweise durch einen oder mehrere Vorsprünge gebildet werden. Indem die Lage eines solchen Vorsprungs erfasst wird, können gleichzeitig die Lagen des Einbringpfostens und des Implantats relativ zu diesem Vorsprung erfasst werden, da ihre relative Anordnung zueinander bekannt ist.

In einer der vorgenannten oder in einer anderen Ausführungsform kann der Scankörperabschnitt einen oder mehrere optische Marker aufweisen. Dies können beispielsweise bestimmte Muster umfassen, wie Kreise oder Linien, die zu ihrer Umgebung einen Kontrast aufweisen, so dass ihre Lage mit Hilfe eines Intraoralscanners eindeutig bestimmbar ist. Demnach kann der Scankörperabschnitt auch eine rotationssymmetrische Gestalt haben und dennoch eine eindeutige Bestimmung seiner Lage gestatten.

Der erste und/oder der zweite Antriebsabschnitt können ein Antriebsprofil, beispielsweise ein Vielkantprofil aufweisen, sodass eine Drehmomentübertragung zum Einschrauben des Implantats erfolgen kann.

Weiterhin kann der Einbringpfosten eine Nut zur Aufnahme eines ersten Sicherungselements, vorzugsweise eines O-Rings, aufweisen. Dadurch kann der mit dem Implantat verbundene Einbringpfosten mit einer Einbringhilfe gesichert verbunden werden, sodass das Risiko eines Lösens von Einbringpfosten und Implantat innerhalb des Mundraums beim Einbringen des Implantats minimiert oder ausgeschlossen werden kann.

In einer der vorgenannten Ausführungsformen oder in einer weiteren Ausführungsform ist der zweite Antriebsabschnitt starr und/oder einstückig mit dem Scankörperabschnitt verbunden.

Weiterhin kann der Einbringpfosten einen Durchgangskanal aufweisen, durch den eine Schraube geführt werden kann, welche den Einbringpfosten mit dem Implantat verbinden kann und sicherstellt, dass sich der Einbringpfosten beim Einbringen des Implantats nicht vom Implantat löst.

Das System kann neben dem Einbringpfosten nach einem der zuvor genannten Ausführungsformen auch ein Implantat umfassen, wobei das Implantat eine Aufnahme für den zweiten Antriebsabschnitt des Einbringpfostens umfasst.

Das Implantat umfasst vorzugsweise eine Anschlussgeometrie mit einer ein- oder mehrzähligen Geometrie. Die Zähligkeit gibt an, wie viele Drehwinkelpositionen es bei einer Drehung um 360° um eine Längsachse des Implantats gibt, bei denen die Lage des Profils der Anschlussgeometrie identisch ist. Das Profil einer Anschlussgeometrie bezeichnet die gedachte Draufsichtkontur auf die Anschlussgeometrie. Beispielsweise weist ein Dreikantprofil mit einer dreizähligen Geometrie drei identische Lagen auf, sodass das Profil dieser Anschlussgeometrie bzw. die Lage des Profils bei einer Drehung um 120° identisch ist. Weil das Implantat und der Einbringpfosten bei einer Verbindung nicht gegeneinander verdrehbar sind, ist die Drehwinkelposition des Implantats eindeutig durch die Drehwinkelposition des Einbringpfostens bestimmt. Auch wenn ein eindeutiger Zusammenhang besteht, muss es nicht unbedingt erforderlich sein, die genaue Drehwinkelposition des eingebrachten Implantats zu kennen. Es kann ausreichen, lediglich die Drehwinkelposition des Profils der Anschlussgeometrie zu kennen.

Bei dem System ist die lösbare Verbindung zwischen dem Einbringpfosten und dem Implantat vorzugsweise gesichert oder sicherbar.

Die Sicherung kann beispielsweise mit Hilfe eines zweiten Sicherungselements, vorzugsweise einer Schraube, erfolgen.

Alternativ oder zusätzlich kann die Verbindung zwischen dem Einbringpfosten und dem Implantat auch durch einen Reibschluss, beispielsweise einem Stick-Fit-Effekt gesichert sein. Aufgrund der Sicherung kann ein unbeabsichtigtes Lösen der Verbindung zwischen Implantat und dem Einbringpfosten verhindert werden.

Gemäß einer vorteilhaften Weiterbildung umfasst das erfindungsgemäße System weiterhin eine Einbringhilfe, die mit dem ersten Antriebsabschnitt des Einbringpfostens in Drehmomenteingriff gebracht werden kann und die mit dem Einbringpfosten lösbar verbindbar ist. Ebenso wie die Verbindung zwischen dem Einbringpfosten und dem Implantat ist die lösbare Verbindung zwischen der Einbringhilfe und dem Einbringpfosten vorzugsweise gesichert oder sicherbar. Die Sicherung kann beispielsweise mit Hilfe eines O-Rings erfolgen. Das System aus Einbringhilfe, Einbringpfosten und Implantat bietet den großen Vorteil, dass dieses System gemeinsam im verbundenen Zustand und steril bereitgestellt werden kann. Mit Hilfe dieses Systems kann die Implantatinsertionssitzung sehr effizient und vereinfacht durchgeführt werden, weil kein Verbinden verschiedener Teile notwendig ist und weil das vorverbundene System direkt aus einer sterilen Verpackung für die Insertion des Implantats entnommen werden kann. Nachdem das Implantat mit Hilfe der Einbringhilfe eingeschraubt worden ist, muss die Einbringhilfe lediglich entfernt werden, um die Lage des Implantats mit Hilfe des Scankörperabschnitts des Einbringpfostens (digital) zu erfassen. Anschließend wird der Einbringpfosten vom eingebrachten Implantat entfernt und die Operationswunde kann vernäht werden.

Die Möglichkeit, das System aus Einbringhilfe, Einbringpfosten und Implantat als Ganzes steril verpackt zur Verfügung zu stellen, stellt einen großen Vorteil gegenüber herkömmlichen Systemen dar, bei denen der Scankörper und die Klebebasis in der Praxis nicht steril sondern lediglich desinfiziert sind.

Die Einbringhilfe kann eine Drehmomentratsche umfassen, die sicherstellt, dass das Drehmoment zum Einschrauben des Implantats ein vorbestimmtes maximales Drehmoment nicht übersteigt.

Weiterhin betrifft die vorliegende Erfindung die Verwendung eines Systems nach einer der zuvor genannten Ausführungsformen für ein Erfassen der Lage des eingebrachten Implantats mit Hilfe eines Intraoralscanners.

Das erfindungsgemäße Scansystem umfasst ferner einen Speicher oder ein Speichermedium für
einen digitalen Datensatz, in dem die charakteristischen Merkmale des Scankörperabschnitts hinterlegt sind, die die Bestimmung der Lage des Scankörperabschnitts in einem Intraoralscan gestatten.

Die genannten charakteristischen Merkmale können eines oder mehrere der folgenden Merkmale umfassen:
- die Geometrie des Scanköperabschnitts,
- die Oberflächengestaltung des Scankörperabschnitts,
- die Lage von Markern auf dem Scankörperabschnitt,
- charakteristische Merkmale von Markern auf dem Scankörperabschnitt.

Um die Lage eines eingebrachten Implantats zu erfassen, kann das Scansystem weiterhin eine Intraoralscanvorrichtung umfassen, die geeignet und dazu eingerichtet ist, die Lage des Scankörperabschnitts des mit dem eingebrachten Implantat verbundenen Einbringpfostens in Bezug auf benachbarte Zahnstrukturen mithilfe eines optischen Abtastens in einem digitalen Datensatz zu erfassen.

Schließlich umfasst die vorliegende Erfindung ein Verfahren zum Erfassen der Lage eines eingebrachten Implantats, wobei das Implantat mit einem Einbringpfosten nach einer der zuvor genannten Ausführungsformen verbunden ist, wobei das Verfahren die folgenden Schritte umfasst:
optisches Abtasten zumindest eines Teils des Scankörperabschnitts des Einbringpfostens und ein optisches Abtasten von Zahnstrukturen, die zum Einbringpfosten benachbart sind.

### KURZBESCHREIBUNG DER FIGUREN

Weitere Vorteile und Merkmale der Erfindung werden anhand der folgenden Figuren, in denen gleiche Elemente mit gleichen Bezugszeichen versehen sind, näher erläutert, wobei
- Figur 1: ein Implantat und einen erfindungsgemäßen Einbringpfosten gemäß einer ersten Ausführungsform zeigt,
- Figur 2: ein Implantat und einen erfindungsgemäßen Einbringpfosten gemäß einer zweiten Ausführungsform zeigt,
- Figur 3: ein Implantat und einen erfindungsgemäßen Einbringpfosten gemäß einer dritten Ausführungsform zeigt,
- Figur 4: ein erfindungsgemäßes System mit einer Einbringhilfe, einem Implantat und dem erfindungsgemäßes Einbringpfosten gemäß der dritten Ausführungsform zeigt,
- Figur 5: ein Implantat und einen erfindungsgemäßen Einbringpfosten gemäß einer vierten Ausführungsform zeigt,
- Figur 6: eine schematische Darstellung einer intraoralen Scananordnung zeigt,
- Figur 7: ein zweidimensionales Abbild einer mit einer intraoralen Scanvorrichtung erfassten Zahnstumpfrekonstruktion zeigt, und
- Figur 8: eine schematische Darstellung des Triangulationsprinzips zeigt.

### AUSFÜHRLICHE BESCHREIBUNG BEISPIELHAFTER AUSFÜHRUNGSFORMEN

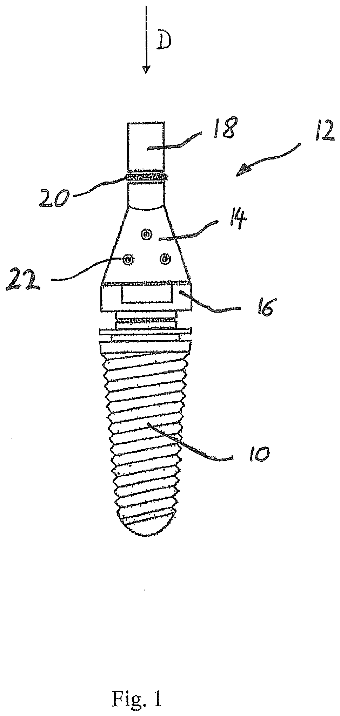

Figur 1 zeigt ein Implantat 10, das mit einem erfindungsgemäßen Einbringpfosten 12 gemäß einer ersten Ausführungsform verbunden ist. Der Einbringpfosten 12 umfasst einen Scankörperabschnitt 14, einen ersten Antriebsabschnitt 16 und einen zweiten Antriebsabschnitt (nicht gezeigt), der in dem Implantat 10 aufgenommen ist. Mit Hilfe einer Schraube 18 kann der Einbringpfosten 12 lösbar mit dem Implantat 10 verbunden werden. Die Schraube 18 umfasst eine Nut 20, die zur Aufnahme eines O-Rings bestimmt ist.

Sowohl der erste Antriebsabschnitt 16 als auch der zweite Antriebsabschnitt (nicht gezeigt) weisen in Draufsichtrichtung, die in Figur 1 mit "D" bezeichnet ist, ein nicht rotationssymmetrisches Profil auf, beispielsweise ein Vielkantprofil. Das Implantat 10 umfasst eine Aufnahme (nicht gezeigt) mit einem Draufsichtprofil, das zu dem Profil des zweiten Antriebsabschnitts (nicht gezeigt) des Einbringpfostens 12 komplementär ist. Der Einbringpfosten 12 und das Implantat 10 sind daher im verbundenen Zustand in Bezug auf eine Längsachse des Implantats, die der eingezeichneten Draufsichtrichtung D entspricht, nicht gegeneinander verdrehbar. Der Scankörper 14 des in Figur 1 gezeigten Einbringpfostens 12 weist eine rotationssymmetrische Kegelform auf und umfasst optische Marker 22, die eine eindeutige Erfassung der Lage des Scankörperabschnitts 14 mit Hilfe eines Intraoralscanners gestatten.

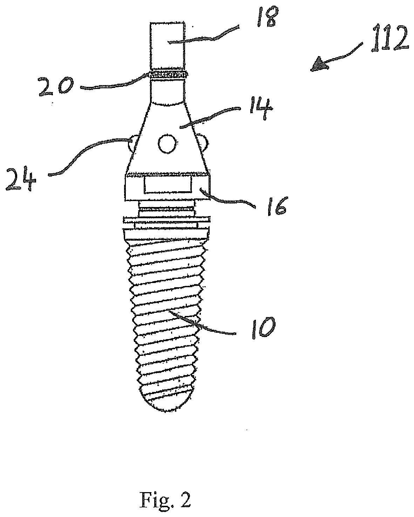

Figur 2 zeigt das Implantat 10 und einen Einbringpfosten 112 gemäß einer zweiten erfindungsgemäßen Ausführungsform, die im Unterschied zur vorgenannten Ausführungsform 12 keine optischen Marker 22, sondern geometrische Marker 24 umfasst. Die Aufnahme des Implantats 10, die den zweiten Antriebsabschnitt (nicht gezeigt) des Einbringpfostens 112 aufnimmt, kann gleichzeitig eine Anschlussgeometrie für die spätere Verbindung mit einem Zahnersatz darstellen. Alternativ kann die Anschlussgeometrie auch zusätzlich zur Aufnahme für den zweiten Antriebsabschnitt vorhanden sein und sich von diesem unterscheiden. Weil die relative Lage zwischen den geometrischen Markern 24 und dem Implantat 10 oder zumindest die relative Lage zwischen den geometrischen Markern und dem Profil der Anschlussgeometrie des Implantats 10 bekannt ist, wird mit der Erfassung der Lage der geometrischen Marker 24 gleichzeitig die Lage des Implantats 10 oder zumindest die Lage des Profils der Anschlussgeometrie erfasst. Auch wenn dieses Prinzip nicht ausdrücklich für die vorgenannte und die nachfolgenden Ausführungsformen beschrieben ist, so kann es dennoch analog für diese Ausführungsformen angewandt werden, auch wenn sich die Scankörperabschnitte in ihrer Form unterscheiden.

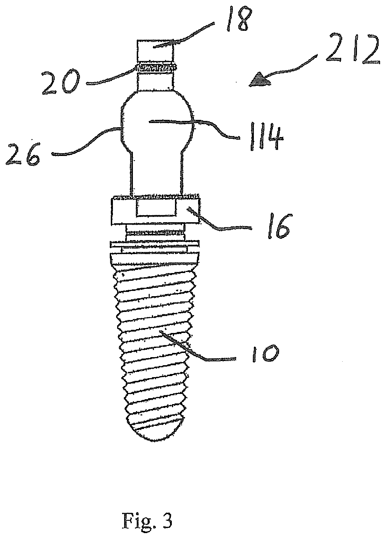

Figur 3 zeigt ein Implantat 10, das mit einem Einbringpfosten 212 gemäß einer dritten erfindungsgemäßen Ausführungsform verbunden ist. Im Unterschied zu den zuvor genannten Ausführungsformen hat der Scankörperabschnitt 114 der dritten Ausführungsform 212 teilweise die Form eines Kugelabschnitts und weist zudem eine seitliche Abflachung 26 auf. Aufgrund der seitlichen Abflachung 26 hat der Scankörperabschnitt 114 in der Draufsicht ein nicht rotationssymmetrisches Profil und ist somit die Lage des Scankörperabschnitts 114 eindeutig bestimmbar. Insofern stellt der Scankörperabschnitt 114 in dieser Ausführungsform selbst einen für die Zwecke des optischen Scannens gut geeigneten geometrischen Marker dar.

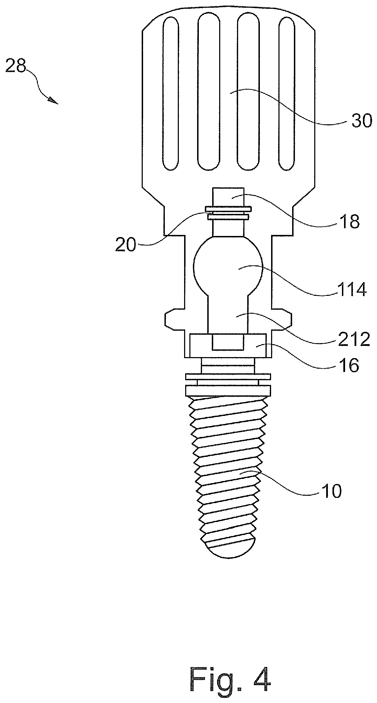

Figur 4 zeigt ein System 28 mit einem Implantat 10, mit dem Einbringpfosten 212 gemäß der dritten Ausführungsform und mit einer Einbringhilfe 30. Die Einbringhilfe 30 ist auf den Einbringpfosten 212 aufgesetzt und steht in Drehmomenteingriff mit dem ersten Antriebsabschnitt 16. Die Verbindung zwischen der Einbringhilfe 30 und dem Einbringpfosten 212 ist mit Hilfe eines O-Rings gesichert, der sich in der Nut 20 der Schraube 18 befindet. Aufgrund dieser Sicherung kann verhindert werden, dass sich bei der Implantatinsertion der Einbringpfosten 212 mitsamt dem Implantat 10 unabsichtlich von der Einbringhilfe 30 löst. Dadurch wird das Aspirationsrisiko erheblich vermindert. Die Verbindung zwischen dem Implantat 10 und dem Einbringpfosten 212 ist ebenfalls gesichert, nämlich mit der Schraube 18.

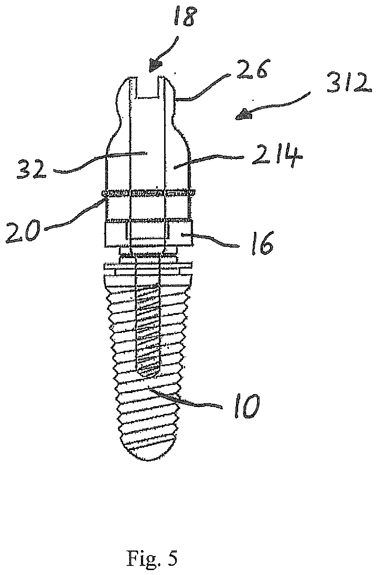

Figur 5 zeigt schließlich einen mit einem Implantat 10 verbundenen Einbringpfosten 312 gemäß einer vierten Ausführungsform mit einem Scankörperabschnitt 214, der eine teilweise Doppelkugelform mit einer seitlichen Abflachung 26 aufweist. In Figur 5 ist zu erkennen, dass der Einbringpfosten 312 einen Durchgangskanal 32 aufweist, in dem die Schraube 18 aufgenommen werden kann. Im Unterschied zu den zuvor genannten Ausführungsformen ist die Nut 20 zur Aufnahme eines O-Rings, mit dem die Verbindung zwischen Einbringpfosten 312 und Einbringhilfe 30 gesichert werden kann, am Einbringpfosten vorgesehen.

Im Folgenden wir erläutert wie mithilfe eines erfindungsgemäßen Einbringpfostens die Lage eines eingebrachten Implantats in Bezug auf benachbarte Mundraumstrukturen erfasst werden kann.

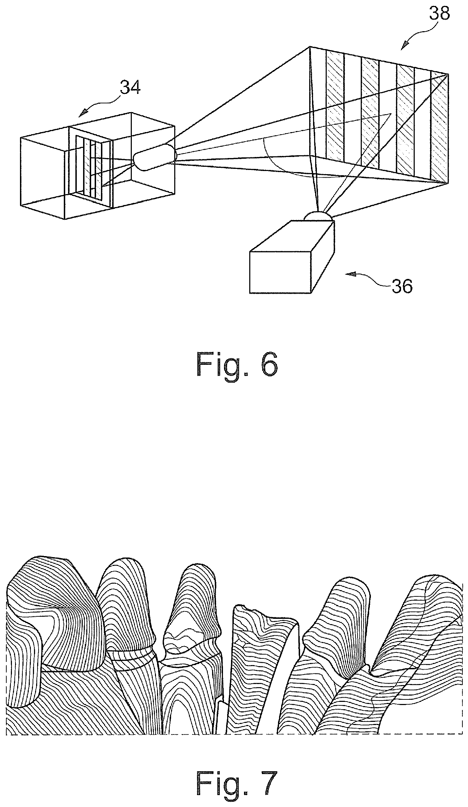

Figur 6 zeigt schematisch eine Kamera 34 und eine Streifenlichtquelle 36 einer Intraoralscanvorrichtung. Die Streifenlichtquelle 36 dient zur Projektion eines Streifenmusters auf ein Objekt 38. Die Kamera 34 erfasst ein zweidimensionales Abbild des mit dem Streifenmuster beleuchteten Objekts 38.

In Figur 7 ist ein solches zweidimensionales Abbild von einer mit einem Streifenmuster beleuchteten Zahnstumpfrekonstruktion dargestellt. Die Information über die dritte Dimension, die senkrecht zur Bildebene verläuft und im Folgenden als z-Richtung bzw. "Tiefe" bezeichnet wird, ist in der Verzerrung der in Figur 7 dargestellten Projektion des Streifenmusters enthalten und kann mit Hilfe des Triangulationsprinzips gewonnen werden.

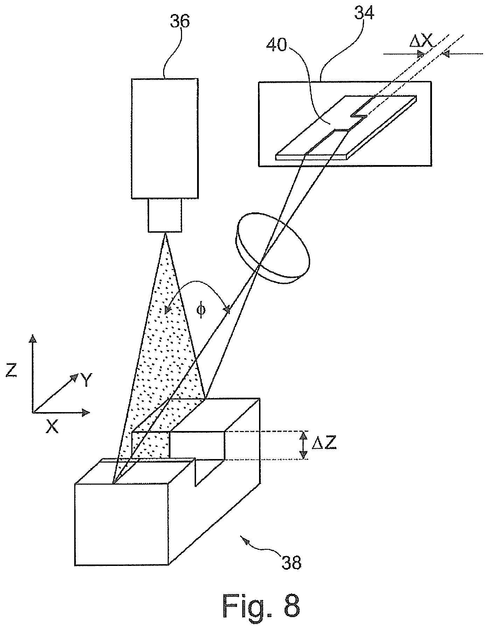

Das Triangulationsprinzip ist in Figur 8 veranschaulicht, in der ein dreidimensionales Objekt 38 mit einer durch eine scanbare Laserlichtquelle 36 bereitgestellten Lichtscheibe in einem einzelnen Oberflächenstreifen beleuchtet wird. Man beachte, dass eine scanbare Laserlichtquelle dieselbe Funktion ausüben kann wie eine Streifenlichtquelle, sodass beide Lichtquellentypen als einander entsprechende Komponenten mit demselben Bezugszeichen versehen sind. Die Kamera 34 erfasst die Oberfläche des beleuchteten Objekts 38 aus einer Richtung, die um den Triangulationswinkel Φ zur Beleuchtungsrichtung der Streifenlichtquelle 36 geneigt ist, so dass bei einem Verschieben der Lichtscheibe in Bezug auf das Objekt 38 und senkrecht zur Lichtscheibe, nämlich in die in Figur 8 gezeigte Scanrichtung x, bei unterschiedlichen in x-Richtung beabstandeten Scanpositionen unterschiedliche in z-Richtung beabstandete Oberflächenabschnitte des Objekts 38 in einer Chip-Ebene 40 der Kamera 34 abgebildet werden. Über den gezeigten Abstand Δx im zweidimensionalen Abbild in der Chip-Ebene 40, das von der Kamera 34 über eine Scanzeit hinweg erfasst wird, kann mit Hilfe des Triangulationswinkels Φ und eines bekannten Scanweges in x-Richtung eine Tiefeninformation Δz des Objekts 38, die in Figur 8 gezeigt ist, gemäß der Beziehung *Δx* = *Δz* · *sin*Φ bestimmt werden.

Anstatt mit einem zeitlichen Scannen, wie es anhand der Figur 8 mit einem einzelnen Beleuchtungsstreifen beschrieben wurde, kann die Tiefeninformation Δz auch mit Hilfe einer einzelnen nicht über einen Zeitraum erfolgenden Aufnahme ermittelt werden, wenn - wie in Figur 7 dargestellt ist - ein Streifenmuster mit vielen parallelen Beleuchtungsstreifen verwendet wird. In diesem Fall ergibt sich die Tiefeninformation Δz aus der Verzerrung der in die Chip-Ebene 40 abgebildeten Streifenprojektion.

Auf die zuvor beschriebene Weise können mit einer Intraoralscanvorrichtung eine oder mehrere zweidimensionale Abbildungen aufgenommen werden, die die dreidimensionale Mundraumsituation des Patenten einschließlich der dreidimensionalen Lage des Scankörperabschnitts relativ zu dieser enthalten. Die Abbildungen werden auf einem Datenträger oder in einem elektronischen Speicher gespeichert. Weil die charakteristischen und zur Lageerfassung notwendigen Daten in Bezug auf den Scankörperabschnitt bekannt und hinterlegt sind, und weil ferner die relative Lagebeziehung zwischen dem Scankörperabschnitt und dem Implantat bei einer Verbindung mit dem Einbringpfosten bekannt und hinterlegt ist, kann die relative Lage des eingebrachten Implantats in Bezug auf die Mundraumsituation des Patienten anhand der einen oder mehreren gespeicherten Abbildungen bestimmt werden.

Auf Basis der einen oder mehreren Abbildungen kann mithilfe einer digitalen Weiterverarbeitung ein passender Zahnersatz angefertigt werden.

Es ist zu beachten, dass die vorgenannten Ausführungsformen als rein beispielhaft und die Erfindung nicht einschränkend anzusehen sind. Die beschriebenen Merkmale können in beliebiger Kombination von Bedeutung sein.

### BEZUGSZEICHENLISTE

- 10: Implantat
- 12, 112, 212, 312: Einbringpfosten
- 14, 114, 214: Scankörperabschnitt
- 16: erster Antriebsabschnitt
- 18: Schraube
- 20: Nut
- 22: optischer Marker
- 24: geometrischer Marker
- 26: seitliche Abflachung
- 28: System
- 30: Einbringhilfe
- 32: Durchgangskanal
- 34: Kamera
- 36: Streifenlichtquelle/scanbare Laserlichtquelle
- 38: Objekt
- 40: Chip-Ebene

## Patentansprüche

1. Scansystem, umfassend:
einen Einbringpfosten (12, 112, 212, 312) zum Einbringen eines Implantats (10) in einen Kieferknochen, wobei der Einbringpfosten (12, 112, 212, 312) Folgendes umfasst:
- einen ersten Antriebsabschnitt (16) zur Übertragung eines Drehmoments auf den Einbringpfosten,
- einen zweiten Antriebsabschnitt zur Übertragung eines Drehmoments von dem Einbringpfosten (12, 112, 212, 312) auf das Implantat (10),
- wobei der Einbringpfosten (12, 112, 212, 312) mit dem Implantat (10) lösbar derart verbindbar ist, dass bei der Verbindung ein eindeutiger Zusammenhang zwischen der Lage des Implantats (10) und der Lage des Einbringpfostens (12, 112, 212, 312) besteht, und
- wobei der Einbringpfosten (12, 112, 212, 312) einen Scankörperabschnitt (14, 114, 214) umfasst, der eine Bestimmung der Lage des Einbringpfostens (12, 112, 212, 312) mittels eines Intraoralscanners gestattet,
- wobei das Scansystem ferner einen Speicher oder ein Speichermedium für einen digitalen Datensatz umfasst, in dem die charakteristischen Merkmale des Scankörperabschnitts (14, 114, 214) hinterlegt sind, die die Bestimmung der Lage des Scankörperabschnitts (14, 114, 214) in einem Intraoralscan gestatten.

2. Scansystem nach Anspruch 1, bei dem der Scankörperabschnitt (14, 114, 214) nicht rotationssymmetrisch ist.

3. Scansystem nach Anspruch 1 oder 2, bei dem der Scankörperabschnitt (114, 214) abschnittsweise kugelförmig ist, und/oder bei dem der Scankörperabschnitt (114, 214) eine seitliche Abflachung (26) aufweist.

4. Scansystem nach einem der vorhergehenden Ansprüche, bei dem der Scankörperabschnitt (14) einen oder mehrere geometrische Marker (24) aufweist, die beispielsweise jeweils durch einen Vorsprung gebildet sind, und/oder bei dem der Scankörperabschnitt (14) einen oder mehrere optische Marker (22) aufweist.

5. Scansystem nach einem der vorhergehenden Ansprüche, bei dem der erste und/oder der zweite Antriebsabschnitt (16) ein Antriebsprofil, beispielsweise ein Vielkantprofil, aufweisen.

6. Scansystem nach einem der vorhergehenden Ansprüche, wobei der Einbringpfosten (32) eine Nut (20) zur Aufnahme eines ersten Sicherungselements, vorzugsweise eines O-Rings, aufweist.

7. Scansystem nach einem der vorhergehenden Ansprüche, bei dem der zweite Antriebsabschnitt starr und/oder einstöckig mit dem Scankörperabschnitt (14, 114, 214) verbunden ist.

8. Scansystem nach einem der vorhergehenden Ansprüche, wobei der Einbringpfosten (12, 112, 212, 312) weiterhin einen Durchgangskanal (32) aufweist.

9. Scansystem nach einem der vorhergehenden Ansprüche, ferner umfassend:
ein Implantat (10) mit einer Aufnahme für den zweiten Antriebsabschnitt des Einbringpfostens (12, 112, 212, 312), wobei das Implantat (10) vorzugsweise eine Anschlussgeometrie mit einer ein- oder mehr- zähligen Geometrie aufweist.

10. Scansystem nach Anspruch 9, bei dem die lösbare Verbindung zwischen dem Einbringpfosten (12, 112, 212, 312) und dem Implantat (10) gesichert oder sicherbar ist, und/oder bei dem die Verbindung zwischen dem Einbringpfosten (12, 112, 212, 312) und dem Implantat (10) mithilfe eines zweiten Sicherungselements, vorzugsweise einer Schraube (18), sicherbar ist, und/oder bei dem die Verbindung zwischen dem Einbringpfosten (12, 112, 212, 312) und dem Implantat (10) durch einen Reibschluss, vorzugsweise einen Stick-Fit-Effekt, gesichert ist.

11. Scansystem (28) nach einem der Ansprüche 10 bis 14, das weiterhin eine Einbringhilfe (30) umfasst, die mit dem ersten Antriebsabschnitt (16) des Einbringpfostens (12, 112, 212, 312) in Drehmomenteingriff gebracht werden kann und die mit dem Einbringpfosten (12, 112, 212, 312) lösbar verbindbar ist,
wobei die lösbare Verbindung zwischen der Einbringhilfe (30) und dem Einbringpfosten (12, 112, 212, 312) vorzugsweise gesichert oder sicherbar ist, vorzugsweise mithilfe eines O-Rings gesichert ist, und/oder wobei die Einbringhilfe (30) eine Drehmomentratsche umfasst.

12. Scansystem nach einem der vorhergehenden Ansprüche, bei dem die genannten charakteristischen Merkmale eines oder mehrere der folgenden Merkmale umfassen:
- die Geometrie des Scanköperabschnitts (14, 114, 214),
- die Oberflächengestaltung des Scankörperabschnitts (14, 114, 214),
- die Lage von Markern (24, 22) auf dem Scankörperabschnitt (14, 114, 214) charakteristische Merkmale von Markern (24, 22) auf dem Scankörperabschnitt (14, 114, 214).

13. Scansystem nach einem der vorhergehenden Ansprüche, das weiterhin eine Intraoralscanvorrichtung umfasst, die geeignet ist, die Lage des Scankörperabschnitts (14, 114, 214) des mit dem eingebrachten Implantat (10) verbundenen Einbringpfostens (12, 112, 212, 312) in Bezug auf benachbarte Zahnstrukturen mithilfe eines optischen Abtastens in einem digitalen Datensatz zu erfassen.

14. Verwendung eines Scansystems nach einem der Ansprüche 1 bis 13 für ein Erfassen der Lage des eingebrachten Implantats (10) mithilfe eines Intraoralscans.

15. Verfahren zum Erfassen der Lage eines eingebrachten Implantats (10), wobei das Implantat (10) mit einem Einbringpfosten (12, 112, 212, 312) verbunden ist, wobei der Einbringpfosten Folgendes umfasst:
einen ersten Antriebsabschnitt (16) zur Übertragung eines Drehmoments auf den Einbringpfosten,
einen zweiten Antriebsabschnitt zur Übertragung eines Drehmoments von dem Einbringpfosten (12, 112, 212, 312) auf das Implantat (10),
wobei der Einbringpfosten (12, 112, 212, 312) mit dem Implantat (10) lösbar derart verbindbar ist, dass bei der Verbindung ein eindeutiger Zusammenhang zwischen der Lage des Implantats (10) und der Lage des Einbringpfostens (12, 112, 212, 312) besteht, und
wobei der Einbringpfosten (12, 112, 212, 312) einen Scankörperabschnitt (14, 114, 214) umfasst, der eine Bestimmung der Lage des Einbringpfostens (12, 112, 212, 312) mittels eines Intraoralscanners gestattet,
wobei das Verfahren die folgenden Schritte umfasst:
optisches Abtasten zumindest eines Teils des Scankörperabschnitts (14, 114, 214) des Einbringpfostens (12, 112, 212, 312) und optisches Abtasten von Zahnstrukturen, die zum Einbringpfosten (12, 112, 212, 312) benachbart sind.

## Claims

1. A scanning system comprising:
an insertion post (12, 112, 212, 312) for inserting an implant (10) into a jaw bone, wherein the insertion post (12, 112, 212, 312) comprises the following:
a first drive portion (16) for transmitting a torque to the insertion post,
a second drive portion for transmitting a torque from the insertion post (12, 112, 212, 312) to the implant (10),
wherein the insertion post (12, 112, 212, 312) is detachably connected to the implant (10) in such a way that, during the connection, there is an unambiguous coherence between the position of the implant (10) and the position of the insertion post (12, 112, 212, 312), and
wherein the insertion post (12, 112, 212, 312) comprises a scan body portion (14, 114, 214) which allows determination of the position of the insertion post (12, 112, 212, 312) using an intraoral scanner,
wherein the scan system further comprises a memory or a memory medium for a digital data set in which the characteristic features of the scan body portion (14, 114, 214) are stored which permit determination of the position of the scan body portion (14, 114, 214) in an intraoral scan.

2. The scanning system according to claim 1, in which the scanbody portion (14, 114, 214) is not rotationally symmetrical.

3. The scanning system according to claim 1 or 2, in which the scanbody portion (114, 214) is spherical in sections, and/or in which the scanbody portion (114, 214) has a lateral flattening (26).

4. The scanning system according to one of the preceding claims, in which the scanbody section (14) has one or more geometric markers (24) which are each formed, for example, by a projection, and/or in which the scanbody section (14) has one or more optical markers (22).

5. The scanning system according to one of the preceding claims, in which the first and/or the second drive section (16) have a drive profile, for example a polygonal profile.

6. The scanning system according to one of the preceding claims, wherein the insertion post (32) has a groove (20) for receiving a first securing element, preferably an O-ring.

7. The scanning system according to one of the preceding claims in which the second drive section is connected rigidly and/or integrally to the scanbody section (14, 114, 214).

8. The scanning system according to one of the preceding claims, wherein the insertion post (12, 112, 212, 312) further has a through channel (32).

9. The scanning system according to one of the preceding claims, further comprising:
an implant (10) having a receptacle for the second drive portion of the insertion post (12, 112, 212, 312), wherein the implant (10) preferably has a connection geometry with a single or multiple geometry.

10. The scanning system according to claim 9, in which the detachable connection between the insertion post (12, 112, 212, 312) and the implant (10) is secured or can be secured, and/or
in which the connection between the insertion post (12, 112, 212, 312) and the implant (10) can be secured by means of a second securing element, preferably a screw (18), and/or
in which the connection between the insertion post (12, 112, 212, 312) and the implant (10) is secured by a frictional connection, preferably by a stick-fit-effect.

11. The scanning system (28) according to one of claims 10 to 14, further comprising an insertion aid (30) which can be brought into torque engagement with the first drive section (16) of the insertion post (12, 112, 212, 312) and which can be detachably connected to the insertion post (12, 112, 212, 312),
wherein the detachable connection between the insertion aid (30) and the insertion post (12, 112, 212, 312) is preferably secured or can be secured, preferably is secured with the help of an O-rings, and/or wherein the insertion aid (30) comprises a torque ratchet.

12. The scanning system according to one of the preceding claims in which said characteristics comprise one or more of the following characteristics:
- the geometry of the scanning body portion (14, 114, 214),
- the surface design of the scanbody section (14, 114, 214),
- the position of markers (24, 22) on said scanbody portion (14, 114, 214),
- characteristic features of markers (24, 22) on the scanbody section (14, 114, 214).

13. The scanning system according to one of the preceding claims, further comprising an intraoral scanning device which is adapted to detect the position of the scanbody portion (14, 114, 214) of the insertion post (12, 112, 212, 312) connected to the inserted implant (10) with respect to adjacent tooth structures by means of optical scanning in a digital data set.

14. Use of a scanning system according to any of claims 1 to 13 to acquire the position of the inserted implant (10) by intraoral scanning.

15. A method for detecting the location of an inserted implant (10), wherein the implant (10) is connected to an insertion post (12, 112, 212, 312), wherein the insertion post comprises:
a first drive portion (16) for transmitting torque to the insertion post,
a second drive portion for transmitting torque from the insertion post (12, 112, 212, 312) on the implant (10),
wherein the insertion post (12, 112, 212, 312) is detachably connectable to the implant (10) in such a way that, during the connection, there is an unambiguous coherence between the position of the implant (10) and the position of the insertion post (12, 112, 212, 312), and
wherein said insertion post (12, 112, 212, 312) comprises a scanbody portion (14, 114, 214) which allows determination of the position of said insertion post (12, 112, 212, 312) using an intraoral scanner,
wherein the method comprises the following steps:
optically scanning at least a portion of the scanbody portion (14, 114, 214) of the insertion post (12, 112, 212, 312) and optically scanning tooth structures adjacent to the insertion post (12, 112, 212, 312).

## Revendications

1. Système de balayage comprenant :
une tête d'insertion (12,112,212,312) pour l'insertion d'un implant (10) dans un os de maxillaire, la tête d'insertion (12,112,212,312) comprenant ce qui suit :
une première section motrice (16) pour transférer un couple de rotation à la tête d'insertion, une seconde section motrice pour transférer un couple de rotation de la tête d'insertion (12,112,212,312) sur l'implant (10), la
tête d'insertion (12,112,212,312) étant connectable de manière dissociable de manière à ce que lors de la connexion, une nette corrélation entre la position de l'implant (10) et la position de la tête d'insertion (12,112,212,312) existe, et la tête d'insertion (12,112,212,312) comprenant une section de corps de balayage (14,114,214) qui permet une définition de la position de la tête d'insertion (12,112,212,312) au moyen d'un scanner intraoral, le système de balayage comprenant en outre un accumulateur ou un moyen d'accumulation pour jeu de données numériques dans lequel sont enregistrés les éléments caractéristiques de la section de corps de balayage (14,114,214) qui permettent la définition de la position de la section de corps de balayage (14,114,214) dans un balayage intraoral.

2. Système de balayage selon la revendication 1, dans lequel la section de corps de balayage (14,114,214) n'est pas symétrique en rotation.

3. Système de balayage selon la revendication 1 ou 2, dans lequel la section de corps de balayage (114, 214) est par endroits de forme sphérique, et/ou
dans lequel la section de corps de balayage (114, 214) présente un aplat latéral (26).

4. Système de balayage selon une des revendications précédentes, dans lequel la section de corps de balayage (14) présente un ou plusieurs marqueurs géométriques (24) qui sont par exemple constitués respectivement par une saillie, et/ou dans lequel la section de corps de balayage (14) présentz un plusieurs marqueurs optiques (22).

5. Système de balayage selon une des revendications précédentes, dans lequel la première et/ou la seconde section motrice présentent un profil d'entraînement, en particulier un profil quadrangulaire.

6. Système de balayage selon une des revendications précédentes, dans lequel la tête d'insertion (32) présente une rainure (20) destinée à recevoir un premier élément de blocage, de préférence un joint torique.

7. Système de balayage selon une des revendications précédentes, dans lequel la seconde section motrice est connectée rigidement et/ou en une seule pièce à la section de corps de balayage (14,114,214).

8. Système de balayage selon une des revendications précédentes, dans lequel la tête d'insertion (12,112,212,312) présente en outre un canal traversant (32).

9. Système de balayage selon une des revendications précédentes, comprenant en outre :
un implant (10) doté d'un support pour la seconde section motrice de la tête d'insertion (12,112,212,312), l'implant (10) présentant de préférence une géométrie de raccordement dotée d'une géométrie à un ou plusieurs chiffres.

10. Système de balayage selon la revendication 9, dans lequel la connexion dissociable entre la tête d'insertion (12,112,212,312) et l'implant (10) est e ou peut être bloquée et/ou dans lequel la connexion entre la tête d'insertion (12,112,212,312) et l'implant (10) peut être bloquée au moyen d'un second élément de blocage, de préférence une vis (18), et/ou dans lequel la connexion entre la tête d'insertion (12,112,212,312) et l'implant (10) est bloquée par une correspondance de frottement, de préférence un effet d'ajustement par collage.

11. Système de balayage (28) selon une des revendications 10 à 14, qui présente en outre un auxiliaire d'insertion (30) qui peut être amené en prise de couple de rotation avec la première section motrice (16) de la tête d'insertion (12,112,212,312) et qui peut être connecté à la tête d'insertion (12,112,212,312) de manière dissociable,
la connexion dissociable entre l'auxiliaire d'insertion (30) et la tête d'insertion (12,112,212,312) étant de préférence ou pouvant être bloquée, étant de préférence bloquée au moyen d'un joint torique, et/ou
l'auxiliaire d'insertion (30) comprenant un cliquet à couple de rotation.

12. Système de balayage selon une des revendications précédentes, dans lequel les éléments caractéristiques d'une ou plusieurs des caractéristiques suivantes comprennent :
- la géométrie de la section de corps de balayage (14,114,214),
- la conformation de la surface de la section de corps de balayage (14,114,214),
- la position de marqueurs (24,22) sur la section de corps de balayage (14,114,214),
- des éléments caractéristiques de marqueurs (24,22) sur la section de corps de balayage (14,114,214).

13. Système de balayage selon une des revendications précédentes, qui comprend en outre un dispositif de balayage intraoral qui est apte à détecter la position de la section de corps de balayage (14,114,214) de la tête d'insertion (12,112,212,312) connectée à l'implant inséré (10) par rapport à des structures dentaires voisines à l'aide d'un balayage optique dans un jeu de données numériques.

14. Utilisation d'un système de balayage selon une des revendications 1 à 13 pour une détection de la position de l'implant inséré (10) au moyen d'un balayage intraoral.

15. Procédé de détection de la position d'un implant inséré (10), l'implant (10) étant connecté à une tête d'insertion (12,112,212,312), la tête d'insertion comprenant les éléments suivants :
une première section motrice (16) pour transférer un couple de rotation vers la tête d'insertion,
une seconde section motrice pour transférer un couple de rotation de la tête d'insertion (12,112,212,312) vers l'implant (10),
la tête d'insertion (12,112,212,312) pouvant être connectée à l'implant (10) de manière dissociable de manière à ce que, lors de la connexion, une nette corrélation existe entre la position de l'implant (10) et la position de la tête d'insertion (12,112,212,312), et
la tête d'insertion (12,112,212,312) présentant une section de corps de balayage (14,114,214) qui permet une définition de la position de la tête d'insertion (12,112,212,312) au moyen d'un scanner intraoral,
le procédé comprenant les étapes suivantes :
balayage optique d'au moins une partie de la section de corps de balayage (14,114,214) de la tête d'insertion (12,112,212,312) et balayage optique de structures dentaires qui sont voisines de la tête d'insertion (12,112,212,312).
